**Europäisches Patentamt**

**European Patent Office**

**Office européen des brevets**

(19)

(11) Veröffentlichungsnummer: **0 142 017**
**A2**

(12) # EUROPÄISCHE PATENTANMELDUNG

(21) Anmeldenummer: 84112073.6

(22) Anmeldetag: 09.10.84

(51) Int. Cl.⁴: **C 04 B 11/00**
**C 04 B 11/032**

(30) Priorität: 15.10.83 DE 3337555

(43) Veröffentlichungstag der Anmeldung:
22.05.85 Patentblatt 85/21

(84) Benannte Vertragsstaaten:
AT BE CH DE FR GB IT LI LU NL SE

(71) Anmelder: BABCOCK-BSH AKTIENGESELLSCHAFT
vormals Büttner-Schilde-Haas AG
Parkstrasse 29 Postfach 4 und 6
D-4150 Krefeld 11(DE)

(72) Erfinder: Böhle, Hartwig
Vlämenweg 29
D-6430 Bad Hersfeld 1(DE)

(74) Vertreter: Planker, Karl-Josef, Dipl.-Phys.
c/o BABCOCK-BSH AKTIENGESELLSCHAFT Parkstrasse
29 Postfach 4 + 6
D-4150 Krefeld 11(DE)

(54) Verfahren zur Abbindebeschleunigung eines Gipsbreies und seine Anwendung in der maschinellen Gipsfertigteilproduktion.

(57) Bei einem Verfahren zur Abbindebeschleunigung eines Gipsbreies, insbesondere einer Stuckgipsmaische für die Fertigteilproduktion, wird das als Beschleuniger verwendete Kalziumsulfat-Dihydrat in einer wässrigen Suspension mit einem Wasser/Gipsverhältnis größer als 5 cm³/g aus Halbhydrat und/oder Anhydrit III dargestellt und anschließend dem Anmachwasser und/oder dem Gips zugemischt. Das in der Suspensionvorliegende Kalziumsulfat-Dihydrat zeichnet sich nicht nur durch eine stundenlange Lagerfähigkeit ohne wesentliche Aktivitätseinbußen aus, sondern läßt sich auch einfacher dem zu beschleunigenden Gips zudosieren.

EP 0 142 017 A2

./...

Fig. 1

*—1—*

Krefeld, den 5.10.1984
973-Pat-TH/KÜ - H 83/04 EU
J410051

**BABCOCK-BSH AKTIENGESELLSCHAFT**
**vormals Büttner-Schilde-Haas AG**
**4150 Krefeld-Uerdingen**

Verfahren zur Abbindebeschleunigung eines Gipsbreies
und seine Anwendung in der maschinellen
Gipsfertigteilproduktion.

Die Erfindung betrifft ein Verfahren zur Abbindebeschleunigung eines Gipsbreies, insbesondere einer
Stuckgipsmaische, unter Verwendung von Kalziumsulfat-
Dihydrat als Beschleuniger, eine Vorrichtung zur Herstellung des Beschleunigers und die Anwendung des
Verfahrens und der Vorrichtung in einem Verfahren und
einer Anlage zur maschinellen Herstellung von Gipsfertigteilen.

Bei der maschinellen Herstellung von Gipsfertigteilen
ist man gezwungen, Schwankungen in der Produktion, verursacht unter anderem durch schwankende Gipsqualitäten,
auszuregulieren. Darüber hinaus ist man bestrebt, die
Bandgeschwindigkeiten bei kontinuierlichen Produktionsverfahren, z.B. bei der Kartonplattenherstellung, und
die Taktgeschwindigkeiten im Chargenbetrieb, z.B. bei
der Herstellung von Decken-oder Wandbauplatten, zu erhöhen. Aus diesem Grunde gibt man dem zu verarbeitenden
Gipsbrei ein Stellmittel, üblicherweise einen Beschleuniger, zu und reguliert die Schwankungen über die Zudosierung dieses Stellmittels aus. Die Zugabe eines Beschleunigers wirkt sich im allgemeinen negativ auf die
Festigkeit der abgebundenen Plaster aus. Daher, und
auch aus Kostengründen, wird versucht, den Beschleunigeranteil am Gipsbrei so gering wie möglich zu halten.

- 2 -

Es ist bekannt, feingemahlenes Kalziumsulfat-Dihydrat als Beschleuniger zu verwenden. Das gemahlene Dihydratpulver bildet dabei für den abzubindenden Gipsbrei Kristallisationskeime. Das spezifische Beschleunigungsvermögen des Dihydratpulvers - seine Aktivität - wird entscheidend von den aktiven Bruchflächen, d.h. primär von der Feinheit der Vermahlung, bestimmt. Allerdings nimmt mit zunehmender Zeit der Anteil der aktiven Bruchflächen durch Desaktivierung immer mehr ab. Das zwingt dazu, den feingemahlenen Staub unmittelbar nach dem Mahlvorgang einzusetzen, und bereits kurze Lagerzeiten erfordern erhöhte Beschleunigerzugaben, um den Aktivitätsverlust auszugleichen. Als weiterer Nachteil haftet den pulverförmigen Beschleunigern ihre schwierige Handhabung an. Sie lassen sich nur schlecht in den erforderlichen, sich ändernden Mengen zudosieren.

Aus der DE-OS 23 42 027 ist es bekannt, einen Kalziumsulfat-Dihydrat-Beschleuniger durch Mischen mit einer langkettigen Fettsäure oder deren Salz lagerfähig zu machen. Dieses Verfahren ist aufwendig und kostenintensiv, da die Fettsäuren dem Dihydrat zudosiert und eingemischt werden müssen. Darüber hinaus liegt der Beschleuniger ebenfalls in Pulverform vor, wodurch seine Handhabung erschwert ist.

Die Verwendung von schlammförmigem Kalziumsulfat-Dihydrat als Beschleuniger ist aus der US-PS 19 09 465 bekannt. Nach dieser Schrift ist ein Anteil von 25-30 Teilen gebrannten Gipses auf 100 Teile Wasser erforderlich. Die Mischung muß ca. 2 Stunden intensiv gerührt werden, bis der gebrannte Gips vollständig hydrasitisiert ist. Von der Herstellung einer Suspension mit einem größeren Wasseranteil wird also abgeraten. Daher läßt sich dieser Veröffentlichung auch kein Hinweis auf die überraschende Lagerfähigkeit ohne Aktivitätsverlust der nach der Erfindung hergestellten Suspensionen entnehmen.

Eine Aufgabe der vorliegenden Erfindung besteht darin, ein Verfahren zur Abbindebeschleunigung eines Gipsbreies gemäß dem Oberbegriff des Patentanspruchs 1 bereitzustellen, bei dem ein Abbindebeschleuniger verwendet wird, der ohne wesentlichen Aktivitätsverlust stundenlang lagerfähig ist, und der sich einfach handhaben läßt.

Eine zweite Aufgabe der Erfindung besteht darin, eine Vorrichtung zur Herstellung dieses Beschleunigers zu schaffen, die sich auch nachträglich in schon bestehende Anlagen zur Gipsfertigteilproduktion einbauen läßt.

Weitere Aufgaben der Erfindung bestehen darin, ein Herstellungsverfahren für Gipsfertigteile unter Anwendung der erfindungsgemäßen Verfahren und eine Anlage zur Durchführung dieses Herstellungsverfahrens bereitzustellen.

Die erste Aufgabe wird durch die kennzeichnenden Merkmale des Patentanspruchs 1 gelöst. Es zeigte sich überraschenderweise, daß Kalziumsulfat-Dihydrat, das mit den erfindungsgemäßen Maßnahmen dargestellt wurde, ein hervorragend wirkender Beschleuniger ist, der sich, in Wasser suspendiert, ohne wesentliche Beeinträchtigung seiner Aktivität stundenlang lagern läßt. Die Verwendung der Suspension gemäß Patentanspruch 1 kann dabei derart erfolgen, daß die Suspension dem Gipsbrei beim und/oder nach dem Anmachen zugemischt wird. Ebenfalls ist es möglich, sie vor dem Anmachen dem Anmachwasser und/oder dem Gips zuzugeben, es kann auch die Suspension bereits das gesamte Anmachwasser enthalten, d.h. es wird nur noch trockener Gips zugemischt.

Gleichzeitig ist die Handhabung, z.B. die sich ändernde Dosierung, einer Suspension gegenüber einem Staub und einem Schlamm sehr vereinfacht. Die Vereinfachung der Handhabung durch besseres Fließverhalten und verminderte Anbackungen nimmt bei Wasser/Gipsverhältnissen größer 5 cm³/g sprunghaft zu. Es lassen sich auch weitere Zusätze, die die Eigenschaften des Gipsbreies beeinflussen, z.B. dispergierend wirkende Agenzien, einfach in die Suspension zumischen.

Die zweite Aufgabe wird durch die Merkmale des Patentanspruchs 7, die dritte Aufgabe durch die Maßnahmen des Patentanspruchs 8 und die letzte Aufgabe durch die Merkmale des Patentanspruchs 11 gelöst.

Durch die Verwendung nur eines Feststoffes für die Suspensions- und Gipsbreiherstellung gemäß Patentanspruch 2 läßt sich der notwendige Aufwand zur Durchführung des Verfahrens, sowohl bei den Investitionen als auch im Betrieb erheblich verringern.

Es zeigte sich, daß bei den Varianten nach den Patentansprüchen 3 und 4 besonders aktive Beschleuniger entstehen, die gleichzeitig sehr gut lagerfähig sind.

Die Stuckgipsmaischen gemäß den Patentansprüchen 5 und 6 sind besonders gut maschinell verarbeitbar, und die daraus abgebundenen Plaster haben verbesserte Festigkeitswerte.

Die Verfahren nach den Patentansprüchen 9 und 10 sind besonders vorteilhafte Varianten des Verfahrens nach Patentanspruch 8.

Die Erfindung hat noch einen weiteren Vorteil: bei der Herstellung von Gipsfertigteilen wird der Gips unmittelbar nach dem Kalzinieren dem Mischer zugeführt, wo das Anmachwasser beigemischt wird. Er ist daher noch nicht vollständig abgekühlt und weist eine Temperatur von 70 bis 100°C auf. Unter diesen Bedingungen hergestellte Gipsplaster erweisen sich als weniger fest und versteifen langsamer. Daher ist man zum Erreichen bestimmter Festigkeitswerte gezwungen, umfangreiche Kühlmaßnahmen durchzuführen, falls das Anmachwasser nicht in der Lage ist, für ausreichende Abkühlung zu sorgen. Dies ist insbesondere bei der Verwendung von zurückgeführtem Wasser aus Wärmerückgewinnungsprozessen der Fall, aber auch in südlichen Ländern, in denen das Anmachwasser bei erhöhter Temperatur vorliegt. Es zeigte sich, daß die unter Anwendung der Erfindung bei höheren Temperaturen hergestellten, abgebundenen Gipsplaster höhere Festigkeitswerte aufweisen als vergleichbare Plaster aus nicht beschleunigten Gipsbreien.

Im folgenden wird die Erfindung anhand vereinfacht dargestellter Ausführungsbeispiele erläutert.

Beispiel 1
Hartformgips (Basis: Alpha-Halbhydrat).
Versteifungsanfang (Va) und Versteifungsende (Ve) ohne Beschleunigung:
Va = 4,5 min; Ve = 16 min.

Aus dem Hartformgips wurde eine Suspension mit einem Wasser/ Gipsverhältnis von 14 cm³/g durch 60 minütiges Rühren hergestellt. Anschließend wurde durch Zumischen von weiterem Stuckgips ein Gipsbrei mit einem Wasser/ Gipsverhältnis von 0,7 cm³/g hergestellt, der einen Versteifungsanfang von 0,75 min und ein Versteifungsende von 8 min aufwies.

Beispiel 2

Stuckgips (Basis: Beta-Halbhydrat): ohne Beschleunigung
Va = 6 min; Ve = 15 min;
Biegezugfestigkeit Sigma B = 4,7 N/mm²,
Druckfestigkeit Sigma D = 16,7 N/mm²
Im folgenden wurde die Suspensiondurch Rühren (2000 min$^{-1}$) von 30 min Dauer hergestellt. Anschließend wurde Stuckgips derselben Basis bis zu einem Wasser/ Gipsverhältnis von 0,7 cm³/g zugemischt.

2.1 Wasser/Gipsverhältnis der Suspension: 70 cm³/g;
Beschleunigergipsanteil: 1 Gew.-%;
Va = 3,5 min; Ve = 12 min;
Sigma B = 4,8 N/mm²; Sigma D = 15,8 N/mm².

2.2 Wasser/Gipsverhältnisder Suspension: 35 cm³/g;
Beschleunigergipsanteil: 2 Gew.-%;
Va = 2 min; Ve = 7,5 min;
Sigma B = 4,6 N/mm²; Sigma D = 15,9 N/mm²

2.3 Wasser/Gipsverhältnis der Suspension: 14 cm³/g;
Beschleunigergipsanteil: 5 Gew.-%;
Va = 1,5 min; Ve = 4 min;

Beispiel 3

Stuckgips aus Beispiel 2. Die Suspension wurde durch 5 minütiges Mahlen in einer Mörsermühle hergestellt. Die Suspension wurde 5 Minuten gelagert, bevor ein Gipsbrei mit einem Wasser/Gipsverhältnis von 0,7 cm³/g mit ihr beschleunigt wurde.

3.1 Wasser/Gipsverhältnis der Suspension: 20 cm³/g; Beschleunigergipsanteil 0,5 Gew.-%; Va = 2,5 min; Ve = 9,5 min.

3.2 Wasser/Gipsverhältnis der Suspension: 13,3 cm³/g; Beschleunigergipsanteil: 0,75 Gew.-%; Va = 2 min; Ve = 6,5 min;

3.3 Wasser/Gipsverhältnis der Suspension: 10 cm³/g; Beschleunigergipsanteil: 1 Gew.-%; Va = 1,25 min; Ve = 4,5 min;

Das folgende Beispiel zeigt, daß sich die erfindungsgemäße Beschleunigungssuspension ohne wesentliche Aktivitätseinbußen über längere Zeit lagern läßt:

Beispiel 4

Aus dem Stuckgips von Beispiel 2 wurde durch Naßvermahlen in einer Kugelmühle eine Suspension mit einem Wasser/Gipsverhältnis von 14 cm³/g hergestellt. Diese Suspension wurde verschieden lange gelagert und anschließend zur Beschleunigung einer Gipsmaische mit einem Wasser/Gipsverhältnis von 0,7 cm³/g und einem Beschleunigergipsanteil von 1 Gew.-% verwendet.

| Suspensionsalter (min) | Va (min) | Ve (min) |
|---|---|---|
| 10 | 1,25 | 5 |
| 20 | 1,25 | 5,5 |
| 30 | 1,25 | 5,5 |
| 60 | 1,75 | 6,5 |
| 120 | 1,75 | 6,5 |
| 68 (Stunden) | 2 | 9 |

Aus diesen Beispielen wirddeutlich, daß die Beschleunigungsaktivität der Suspension von ihrem Herstellungsverfahren abhängig ist. Bei durch Mahlen hergestellten Suspensionen wird nur etwa 1/5 des Beschleunigergipsanteils von durch Rühren hergestellten Suspensionen benötigt, um den gleichen Beschleunigungseffekt zu erreichen.

Es ist ebenfalls möglich, die Suspensionen bei erhöhter Temperatur, z.B. bei 40°C, mit gleichem Erfolg herzustellen. Der Einsatz des erfindungsgemäßen Verfahrens bei warm angemachten Gipsmaischen führt sogar zu wesentlichen Festigkeitssteigerungen der abgebundenen Plaster gegenüber denen aus nicht beschleunigten Gipsmaischen:

Beispiel 5
Stuckgips (Basis: Beta-Halbhydrat)
a) Werte ohne Beschleunigerzugabe:
   Gipstemperatur 20°C; Anmachwassertemperatur 20°C
   Va = 12 min; Ve = 29 min;
   abgebundene Probekörper:
   Sigma B = 3,7 N/mm²; Sigma D = 10,6 N/mm².

Gipstemperatur 86°C; Anmachwassertemperatur 20°C

Va = 26 min; Ve = 50 min;

abgebundene Probekörper:

Sigma B = 3,3 N/mm²; Sigma D = 9 N/mm².

b) mit Beschleunigerzugabe (Verfahren nach Beispiel 3):

Gipstemperatur 86°C; Anmachwassertemperatur 20°C

Va = 1,5 min; Ve = 5 min;

abgebundene Probekörper:

Sigma B = 4,3 N/mm²; Sigma D = 14,4 N/mm².

Die hohe Aktivität der Beschleunigersuspensionen im Vergleich zu gemahlenem Dihydratpulver erklärt sich in dem unterschiedlichen Aufbau der Kalziumsulfat-Dihydrat-Kristalle. Durch die Erzeugung aus Halbhydrat und/oder Anhydrit III unter den angegebenen Bedingungen entstehen feinste, nadelige Primärkristalle mit großer Aktivität. Das Mahlen beim Umkristallisieren in der wässrigen Lösung verstärkt diesen Vorgang noch erheblich.

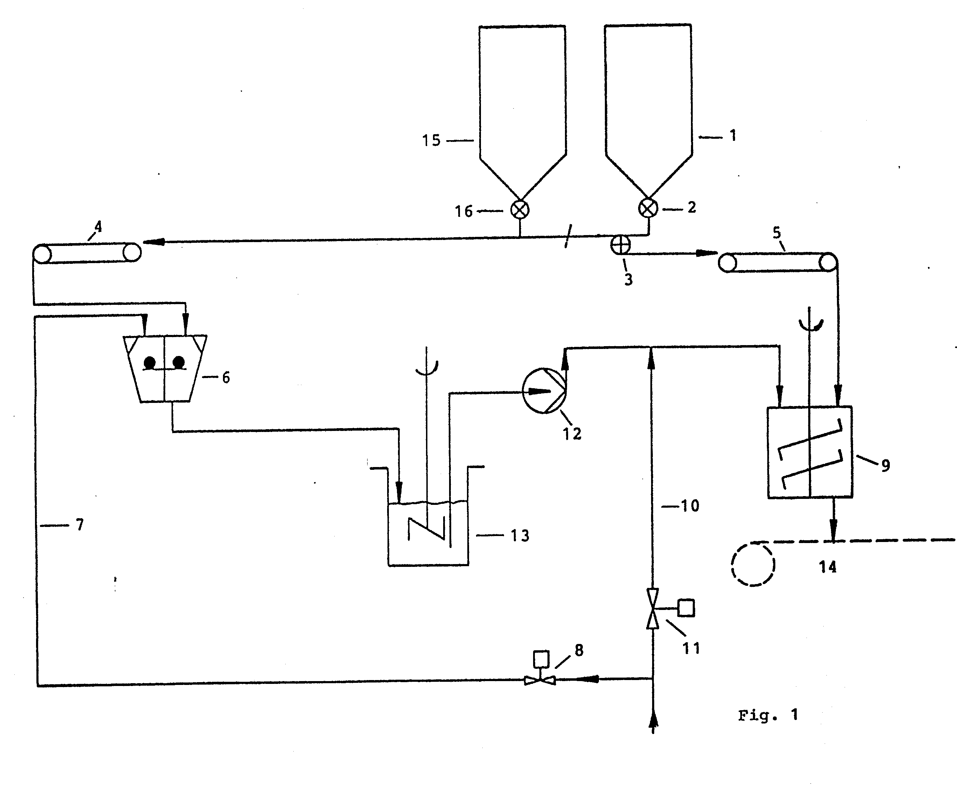

In Figur 1 ist grob-schematisch eine Anlage zur Gipsfertigteilproduktion dargestellt.

Ein Stuckgipssilo 1 mit einer Dosiereinrichtung 2 ist mit einer Verteilstation 3 verbunden, von der zwei Transportbänder ausgehen, in die jeweils eine Bandwaage 4, 5 integriert ist. Das eine Transportband führt in eine Trommelmühle 6, die im vorliegenden Beispiel eine Kugelmühle ist. In der Kugelmühle 6 endet eine Wasserzuleitung 7 mit einem Ventil 8. Das zweite Förderband führt zu einem Gipsmischer 9, in den eine Wasserleitung 10 mündet, deren Zufluß über das Ventil 11 steuerbar ist. Die Kugelmühle 6 ist mit der Wasserleitung über eine Suspensionspumpe 12 verbunden, zwischen der Suspensionspumpe 12 und der Kugelmühle 6 befindet sich ein Zwischenbehälter 13 mit Rührwerk für die Suspension. Im Anschluß an den Gipsmischer 8 folgt eine Formstation 14 für die Gipsfertigteile.

Bei einem kontinuierlichen Verfahren, z.B. bei der Gipskartonplattenherstellung, wird aus dem Stuckgipssilo 1 kontinuierlich die Stuckgipsmenge abgezogen, die für den benötigten Durchsatz im Gipsmischer 8 benötigt wird. In Abhängigkeit vom gewünschten Beschleuniger-Gipsanteil wird der Gipsstrom in der Verteilstation 3 aufgeteilt. Die mengenmäßige Erfassung der beiden Teilströme erfolgt über die Bandwaagen 4 und 5. Ein Teilstrom, im vorliegenden Beispiel 0,5 Gew.-%, wird in der Kugelmühle 6 mit Wasser naß vermahlen. Die erforderliche Wassermenge wird über das Ventil 8 gesteuert, so daß die in der Kugelmühle 6 entstehende Suspension das gewünschte Wasser/Gipsverhältnis erhält. Im vorliegenden Beispiel wird ca. 10 Gew.-% des Anmachwassers zur Suspensionsherstellung abgezweigt. In der Suspension kristallisiert der Stuckgips zu Dihydrat, und es entstehen hochaktive Kristallisationskeime aus Dihydratkristallen.

Die Beschleunigungssuspension aus der Kugelmühle 6 wird im Zwischenbehälter 13 zwischengelagert, aus dem sie mit Hilfe der Suspensionspumpe 12 in die Wasserleitung (10) zum Gipsmischer 9 eindosiert wird. Sie wird so dem Gipsmischer 9 mit dem Anmachwasser zugeführt und dort mit der Hauptmenge an Stuckgips zu einem Gipsbrei mit dem gewünschten Wasser/Gipsverhältnis vermischt. Aus dem Gipsmischer 9 wird die Formstation 14 kontinuierlich mit der Gipsmaische beschickt.

Damit die Schwankungen im Produktionsprozeß durch unterschiedliche Zugabe von Beschleunigungssuspension ausgeglichen werden können, ist eine Zwischenlagerung der Suspension im Zwischenbehälter 13 erforderlich. Dort wird sie zur Verhinderung von Absetzungen gerührt.

Der Ablauf eines diskontinuierlichen Verfahrens, z.B. die Gipsdeckenplatten- oder Gipswandbauplattenproduktion, entspricht im wesentlichen dem vorhin beschriebenen kontinuierlichen Verfahren:

Der Gipsmischer 9 ist als Chargenmischer ausgebildet und anstelle der Formstation 14 befindet sich eine Gießstation. Der Zwischenbehälter 13 ist darüber hinaus so dimensioniert, daß er die Suspensionsmenge aus der Kugelmühle 6, die zwischen den Beschickungszeitpunkten des Chargenmischers anfällt, zwischenlagern kann.

Eine Anlage zur Gipsfertigteilproduktion, in die erst nachträglich eine Vorrichtung zur Herstellung der Beschleunigungssuspension integriert wurde, kann auch zwei getrennte Stuckgipssilos mit Dosiereinrichtungen aufweisen. Das Silo (15) für den Beschleunigergips mit Dosiereinrichtung 16 wurde nachträglich zusammen mit der Mühle 6, der Wasserversorgung (7,8), dem Zwischenbehälter 13 und der Suspensionspumpe 12 eingebaut. In diesem Fall erübrigt sich die Verteilstation 3 und das Transportband zur Mühle 6 ist an das Beschleunigergipssilo (15) angeschlossen.

- 12 -

Krefeld, den 5.10.1984
973-Pat-TH/Kü - H 83/04 EU

BABCOCK-BSH AKTIENGESELLSCHAFT
vormals Büttner-Schilde-Haas AG
4150 Krefeld-Uerdingen

Patentansprüche

1.  Verfahren zur Abbindebeschleunigung eines Gipsbreies, insbesondere einer Stuckgipsmaische für
    die Fertigteilproduktion, unter Verwendung von
    Kalziumsulfat-Dihydrat als Beschleuniger,
    dadurch gekennzeichnet, daß das Dihydrat in einer
    wässrigen Suspension mit einem Wasser/Gipsverhält-
    nis größer als 5 cm³/g aus Halbhydrat und/oder
    Anhydrit III dargestellt wird, und diese Suspension zur Herstellung des Gipsbreies verwendet
    wird, indem sie dem Anmachwasser und/oder dem Gips
    zugemischt wird.

2.  Verfahren nach Anspruch 1, dadurch gekennzeichnet,
    daß zur Darstellung des Beschleunigers ein Anteil
    des zu beschleunigenden Gipses verwendet wird.

3.  Verfahren nach Anspruch 1 oder 2, dadurch gekennzeichnet, daß zur Herstellung der Suspension Halbhydrat und/oder Anhydrit III mindestens 5 Minuten,
    vorzugsweise 15 Minuten bis 45 Minuten, mit Wasser
    verrührt wird.

4.  Verfahren nach Anspruch 1 oder 2, dadurch gekennzeichnet, daß man zur Herstellung der Suspension
    Halbhydrat und/ oder Anhydrit III mit Wasser ver-
    mahlt.

0142017

5.  Verfahren nach Anspruch 3 zur Abbindebeschleunigung einer Stuckgipsmaische mit einem Wasser/
    Gipsverhältnis zwischen 0,2 cm³/g und 1,5 cm³/g,
    dadurch gekennzeichnet, daß der Anteil des Suspensionsgipses am Gesamtgips weniger als 10 Gew.-%,
    vorzugsweise 2 bis 5 Gew.-% beträgt.

6.  Verfahren nach Anspruch 4 zur Abbindebeschleunigung einer Stuckgipsmaische mit einem Wasser/
    Gipsverhältnis zwischen 0,2 cm³/g und 1,5 cm³/g,
    dadurch gekennzeichnet, daß der Anteil des Suspensionsgipses am Gesamtgips weniger als 5 Gew.-%,
    vorzugsweise 0,1 bis 2 Gew.-% beträgt.

7.  Vorrichtung zur Herstellung einer Beschleunigersuspension nach Anspruch 4, gekennzeichnet durch
    folgende Einrichtungen:
    - ein Gipssilo (15) mit Dosiereinrichtung (16);
    - eine Mühle (6), die über
    - eine Fördereinrichtung mit dem Gipssilo (15)
      verbunden ist;

    - eine Wasserzuleitung (7) mit Dosiereinrichtung
      (8) in die Mühle (6).

8.  Herstellungsverfahren für Gipsfertigteile, insbesondere aus Stuckgips, gekennzeichnet durch folgende Verfahrensschritte:

    a.  0,05 bis 10 Gew.-% des anzumachenden Gipses
        werden mit 5 bis 50 Gew.-%, vorzugsweise 10 bis
        30 Gew.-%, des Gesamtanmachwassers zu einer
        Suspension vermischt, deren Wasser/Gipsverhältnis größer als 5 cm³/g ist;

b. Aus dem restlichen Gips und dem restlichen Anmachwasser wird unter Zugabe der Suspension ein Gipsbrei mit einem Wasser/Gipsverhältnis von 0,2 bis 1,5 cm³/g, vorzugsweise 0,4 bis 1,2 cm³/g, hergestellt, wobei die Suspension über das Anmachwasser und/oder dem Gipsbrei zugesetzt wird;

c. der Gipsbrei wird anschließend in die gewünschte Form gebracht.

9. Verfahren nach Anspruch 8, dadurch gekennzeichnet, daß der Anteil des Suspensionsgipses weniger als 10 Gew.-%, vorzugsweise 2 bis 5 Gew.-%, des Gesamtgipses beträgt, und die Suspension durch Rühren von mindestens 5 Minuten, vorzugsweise 15 bis 45 Minuten, Dauer hergestellt wird.

10. Verfahren nach Anspruch 8, dadurch gekennzeichnet, daß der Anteil des Suspensionsgipses weniger als 5 Gew.-%, vorzugsweise 0,1 bis 2 Gew.-%, des Gesamtgipses beträgt, und die Suspension durch Naßvermahlung, vorzugsweise von 2 bis 30 Minuten Dauer, hergestellt wird.

11. Anlage zur Durchführung eines Verfahrens nach Anspruch 10, gekennzeichnet durch folgende Anlagenteile:

- ein Gipssilo (1) mit einer Dosiereinrichtung (2), daran angeschlossen
- eine Verteilstation (3) auf zwei Förderbänder (4, 5),
- - von denen eines in eine Mühle (6) führt, in die eine Wasserzuleitung (7) mündet,

-- das zweite führt in einen Gipsmischer (9) mit einer Wasserversorgung (10);

- die Mühle (6)ist durch eine Förderleitung mit dem Gipsmischer (9) über einen Zwischenbehälter (13) mit einer Rühreinrichtung verbunden;

- dem Gipsmischer (9) folgt eine Formstation (14) für die Fertigteile.

1/1

Fig. 1